# EUROPEAN PATENT APPLICATION

(11) **EP 1 731 029 A1**
(43) Date of publication of application: **13.12.2006**
(21) Application number: 06386016.7
(22) Date of filing: 07.06.2006
(51) Int. Cl.: A01K 55/00

(54) **Apicultural mask**

(30) Priority: 09.06.2005 GR 2005100289
(71) Applicant: Pappas, Nikolaos, 57500 Thessaloniki (GR)
(72) Inventor: Pappas, Nikolaos, 57500 Thessaloniki (GR)
(74) Representative: Gogos, Spyridon

(57) **Abstract**

The Apicultural Mask (an apiarist's protection mask from the bee-bites) consists of a frame, made by metal and textile, having in the face a see through veil.

This frame consists of pipes (2 and 3), a hoop on the top (1), where the textile (7) fits above and behind, and the see through veil (8) fits in the face, having as well a pair of cloth sleeves (9) for protection from the bee-bites. This frame ensures stability having a back rest (4) and a lacing belt (6) round the waist, leaning with shoulder stands (5) over the back of apiarist and it is guaranteed that this apicultural mask does not lean over the apiarist's head but on his shoulders.

The advantage of this patent is that the apiarist's head is unoccupied, since this mask does not lean over his head, he does not sweat often, he can easily wear his glasses and this mask has more stability, even against the wind.

Another advantage is that, the apiarist can easily hold and carry this mask when he does not use it, since it is easily packed and remains half of it, as the down pipe of the frame goes into the other larger pipe, the hoop is bending over towards behind and the shoulder stands are closed inside.

## Description

The patent concerns an apicultural mask (an apiarist's protection mask from the bee bites) which is consisting of a metal frame, lacing belt round the waist, see through veil in front, textile above and back of the head and cloth sleeves.

There are a lot of apicultural masks which are leaned over the head of the apiarist. Consequently, this kind of mask doesn't have stability, cannot stand against the wind, the apiarist easily sweats and his work becomes more difficult.

The above suggested apicultural mask is consisting of a metal frame, which stands over the shoulders with suitable arm-holders and is adjusted with a device, so as the top point of the mask (hoop) is kept up a few centimeters from the head.

Consequently, this suggested apicultural mask gives to the apiarist easiness and effortlessness in his work, he does not sweat often, he can wear his glasses with convenience and this mask has stability even against the wind.

This mask, when the apiarist does not use it, is easily transferred as it is packed and remains half of it, since the down pipe of the frame goes into the other larger pipe. Furthermore the hoop is bending over towards behind and the shoulder stands are closed inside.

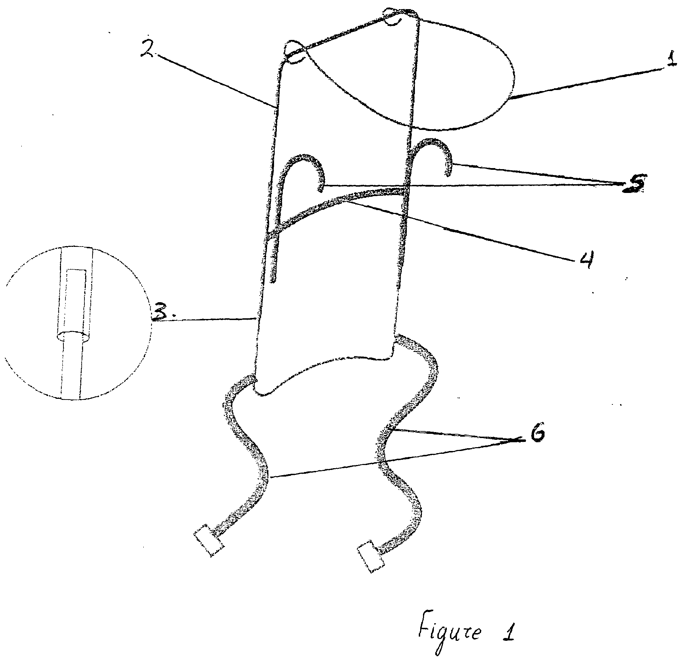

### The figure 1 shows the frame of the mask and its materials.

1 hoop
2 and 3 pipes of different cross section, which form the shape of the frame.
4 bridge fastener of pipe, back rest
5 shoulder stands
6 lacing belt round the waist

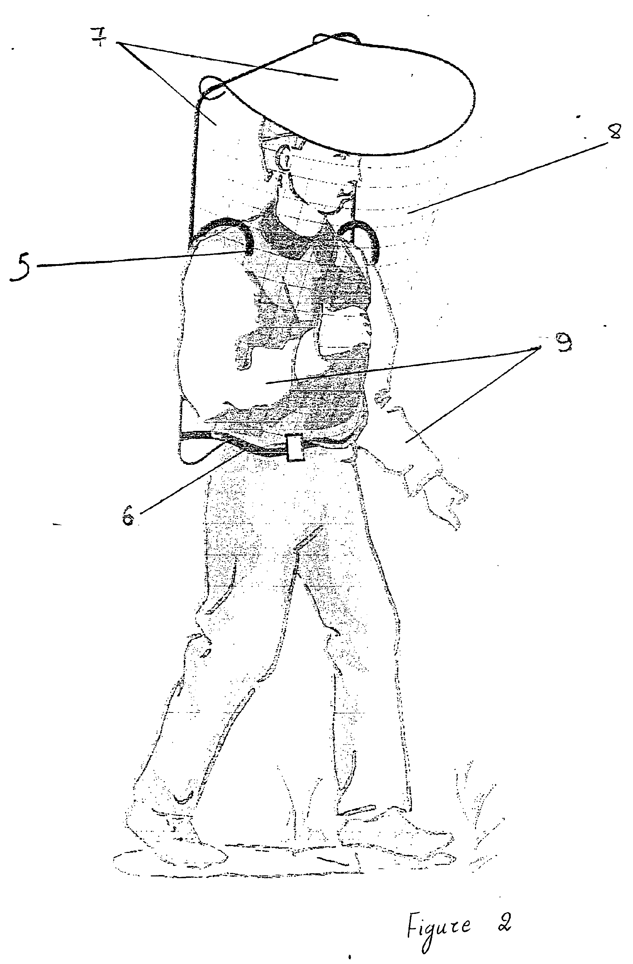

### The figure 2 shows the apicultural mask

5 shoulder stands
6 lacing belts
7 textile
8 see through veil
9 cloth sleeves

## Claims

1. The Apicultural Mask consists of a metal frame (figure 1) which includes a hoop (1), pipes which forms the shape of the frame (2) with identical characteristic the different cross section between them, consequently the down pipe, which is smaller, goes into the top pipe with large cross section (3) so as the mask is packed and transferred easily, bridge fastener of the pipe on the top as a back rest (4), shoulder stands (5) and lacing belt round the waist (6). Furthermore the mask has a cover (figure 2) made by the piece of textile (7), the see through veil (8) in front, as well as the cloth sleeves (9).

2. The Apicultural Mask according to the Claim 1 is differing from the fact that it has shoulder stand which is held on the arms of the apiarist.

3. The Apicultural Mask according to Claim 1 and 2, differs from the fact that it does not lean over the apiarist's head.
